Europäisches Patentamt

European Patent Office

Office européen des brevets

(11) Numéro de publication : **0 382 588 B1**

(12) **FASCICULE DE BREVET EUROPEEN**

(19)

---

(45) Date de publication du fascicule du brevet :
24.03.93 Bulletin 93/12

(21) Numéro de dépôt : **90400085.8**

(22) Date de dépôt : **11.01.90**

(51) Int. Cl.⁵ : **B01J 37/16, // C10G45/40**

---

(54) **Procédé de réduction d'un catalyseur de raffinage avant sa mise en oeuvre.**

---

(30) Priorité : **07.02.89 FR 8901662**

(43) Date de publication de la demande :
**16.08.90 Bulletin 90/33**

(45) Mention de la délivrance du brevet :
**24.03.93 Bulletin 93/12**

(84) Etats contractants désignés :
**AT BE DE GB LU NL**

(56) Documents cités :
**EP-A- 0 303 525**
**FR-A- 2 209 603**
**FR-A- 2 329 762**
**US-A- 3 206 324**
**US-A- 3 635 761**

(73) Titulaire : **EURECAT EUROPEENNE DE
RETRAITEMENT DE CATALYSEURS
Quai Jean Jaurès B.P. 45
F-07800 La Voulte-sur-Rhône (FR)**

(72) Inventeur : **Berrebi, Georges
17, rue Barnave
F-26500 Bourg Les Valence (FR)**

(74) Mandataire : **Andreeff, François et al
INSTITUT FRANCAIS DU PETROLE 4, avenue
de Bois-Préau
F-92502 Rueil-Malmaison (FR)**

---

Jouve, 18, rue Saint-Denis, 75001 PARIS

## Description

L'invention concerne un prétraitement des catalyseurs de raffinage qu'ils soient à l'état neuf ou qu'ils proviennent d'une unité de régénération ou d'activation ou de réactivation.

Certains des catalyseurs de raffinage doivent généralement être présulfurés et éventuellement réduits en présence d'hydrogène avant de pouvoir être utilisés ou réutilisés dans des réactions de conversion d'hydrocarbures, c'est-à-dire avant d'être mis en contact avec les hydrocarbures ou la charge d'hydrocarbures à traiter. C'est le cas notamment des catalyseurs d'hydrodésulfuration.

D'autres catalyseurs doivent être uniquement réduits à l'hydrogène avant d'être utilisés ou réutilisés dans des réactions de conversion d'hydrocarbures, c'est-à-dire, avant d'être mis en contact avec les hydrocarbures ou la charge d'hydrocarbures à traiter. C'est le cas notamment des catalyseurs d'hydrogénation de coupes oléfines en provenance de craquage à la vapeur. De tels catalyseurs n'ont généralement pas à être présulfurés, le soufre étant d'ailleurs plutôt un poison de ce type de catalyseurs.

L'invention concerne une méthode particulière de réduction de cette deuxième classe de catalyseurs qui renferment généralement un support et une phase active à base d'au moins un métal du groupe VIII de la classification périodique des éléments, ce métal étant soit un métal noble de la famille du platine (platine, palladium, ruthénium, iridium, rhodium et osmium) soit un métal non noble de ce groupe VIII, à savoir, le fer, le cobalt et le nickel, et/ou à base d'au moins un métal du groupe Ib, à savoir, le cuivre ou l'argent ou l'or.

L'invention est un perfectionnement de la demande de brevet européen EP-A-0303525 de la demanderesse publiée le 15.02.89 dans laquelle le procédé consiste à effectuer la réduction du catalyseur (soit en dehors du réacteur de raffinage, c'est-à-dire, "ex-situ", soit dans le réacteur de raffinage, c'est-à-dire, "in-situ") en trois étapes :

a) on imprègne dans une première étape le catalyseur entre 0 et 50°C, de préférence entre 0 et 40°C et plus particulièrement entre 10 et 30°C ou à la température ambiante, avec un solvant d'imprégnation, lequel est une solution aqueuse ou organique d'un composé qui est un agent réducteur choisi dans le groupe constitué par les aldéhydes renfermant 2 à 14 atomes de carbone par molécule (et de préférence 3 à 12 atomes de carbone), les cétones ou polycétones refermant 3 à 18 (et de préférence 3 à 12) atomes de carbone par molécule, les éthers refermant 2 à 14 (de préférence 3 à 12) atomes de carbone par molécule, les alcools ou polyalcools renfermant 1 à 14 atomes (et de préférence 2 à 12) de carbone par molécule et les acides organiques ou polyacides renfermant 1 à 14 (et de préférence 1 à 12 atomes de carbone par molécule), de façon à introduire 10 ppm à 100 % (en poids), de préférence 10 ppm à 50 %, ou plus particulièrement 1 000 ppm à 10 % de ce composé sur le catalyseur.

b) on élève dans une deuxième étape la témpérature du catalyseur ainsi imprégné à une témpérature comprise entre 100 et 150°C et sous une pression d'1 à 10 bars (de préférence 1,2 à 5 bars et plus particulièrement 2 à 4 bars, par exemple 3,5 bars), de façon à provoquer un craquage ou une décomposition du composé agent réducteur. Ce craquage ou cette décomposition se traduit par la formation, essentiellement, d'oxyde de carbone qui va provoquer la réduction du catalyseur et provoquer la distribution convenable de la phase active sur le catalyseur. Ce craquage ou décomposition provoque également la formation de vapeur d'eau.

c) on sèche dans une troisième étape le catalyseur pour éliminer le solvant d'imprégnation et l'eau formée à l'étape (b).

Le solvant d'imprégnation est généralement l'eau ou tout solvant organique adéquat dans lequel le composé agent réducteur, différent du solvant choisi, est soluble. On peut citer, les alcools, les éthers, etc.

On cite ci-dessous quelques exemples de composés agents réducteurs :

A titre d'aldéhydes, on citera par exemple, l'éthanal, le propanal, le butanal, l'éthyl-2 butanal, le phénoxy-2 propanal, le méthyl-3 butanal, le méthyl-2 pentanal, l'éthyl-2 hexanal, l'heptanal, l'octanal, le nonanal, le décanal, le docécanal, le diméthyl acétal dodécanal, etc.

A titre de cétones, on peut citer par exemple, l'acétone, la butanone-2, la méthyl-3 butanone-2, la pentanone-2, la pentanone-3, l'hexanone-2, la diméthyl-3,3 hexanone-2, la démithyl-3, 4 hexanone-2, l'hexanone-3, la diméthyl-3,4, hexanone-3, la diméthyl-2,5 hexanone-3, la diméthyl-4,4 hexanone-3, la méthyl-3 hexanone-2, la méthyl-4 hexanone-2, la méthyl-5 hexanone-2, la méthyl-4 hexanone-3, la méthyl-5 hexanone-3, la phényl-1 hexanone-1, l'heptanone-2, l'heptanone-3, l'heptanone-4, la diméthyl-2,6 heptanone-4, l'isopropyl-heptanone-2, la méthyl-3 heptanone-2, la méthyl-6 heptanone-3, la méthyl-2 heptanone-4, la phényl-1 heptanone-1, l'octanone-2, l'octanone-3, l'octanone-4, la méthyl-7 octanone-4, la nonanone-2, la nonanone-4, la nonanone-5, la décanone-2, la décanone-3, la décanone-4, la dodécanone-2, la phényl-1, dodécanone-1.

On peut utiliser des aldéhydes ou des cétones insaturés. On citera à titre d'exemples le buténal-2, l'hexénal-2, la pentène-3 one-2, la pentène-1 diméthyl-5,5 phényl-1 one-3, l'heptène-3 one-2, l'heptène-5 one-2 méthyl-6.

Comme polycétones, on peut utiliser par exemple, la butanédione-2,3 (diméthylglyoxal); le pentadione-2,3; la pentadione-2,4(acetylacétone); la diméthyl-3,3 pentadione-2,4; l'éthyl-3, pentadione-2,4; l'hexanédione-2,5; la diphényl-1,6 hexanédione-1,6; la tétraméthyl-2,2,5,5 hexadione-3,4; l'heptanédione-2,4; l'heptanétrione-2,4,6; l'octanédione-2,3; l'octanédione-2,7; l'octanédione-3,6; l'octanédione-4,5; la tétraméthyl-2,2,7,7 octanédione-3,6; la diphényl-1,4 butène-2 dione-1,4 (dicétone éthylénique), etc.

A titre d'éther, on citera par exemple :

le diméthyl éther, le diéthyl éther, le méthyl éthyl éther, le méthyl butyl éther, le méthyl t-butyl éther, le méthyl-2 éthyl hexyl éther, l'éthyl butyl éther, l'éthyl t-butyl éther, le di n-propyl éther, l'éther isoamylique, le furanne, le tétrahydofuranne, le dioxanne, etc.

A titre d'alcool, on citera par exemple :

le méthanol, l'éthanol, le propranol, le n-butanol, l'isobutanol, le pentanol-1, le pentanol-2, le méthyl-2-butanol-4, le méthyl-2 butanol-3, les hexanols, les méthyl-pentanols, les diméthyl-butanols, les heptanols, les octanols ou les alcools amyliques $C_5H_{11}OH$.

A titre d'acide, on citera par exemple, ceux qui correspondent aux aldéhydes, cétones et/ou alcools nommés ci-dessus. On peut citer l'acide lactique ou l'acide citrique, l'acide formique, l'acide propionique.

Le procédé peut être effectué "in situ" ou "ex-situ". Le catalyseur réduit par des méthodes ne présentant aucun danger (manipulations d'hydrogène supprimées) est alors livré au raffineur complètement prêt à 'emploi, libérant ainsi le raffineur d'opérations délicates et contraignantes comme il a été expliqué plus haut. Il est ainsi possible qu'un raffineur fasse sous-traiter l'opération de réduction de ses catalyseurs, même éventuellement ses catalyseurs de reformage catalytique s'il estime utile.

L'invention concerne l'introduction d'au moins un additif à base d'un halogène au cours de la première étape du procédé.

Le procédé d'introduction d'additif est caractérisé en ce que au cours de la première étape on ajoute en poids (poids exprimé en halogène), par rapport au poids d'agent réducteur 0,1 à 10 % de préférence 1 à 6 % et plus particulièrement 2 à 5 % d'au moins un additif choisi dans le groupe constitué par les halogènes et les composés halogénés.

Le ou les additifs peuvent être ajoutées, par exemple, avec la solution du ou des agents réducteurs utilisés, soit à l'état pur, soit dissous dans un solvant adéquat, tels que les alcools et les éthers, etc.

Le ou les composés organiques halogénés selon l'invention, peuvent être utilisés dans un autre solvant adéquat tel que, par exemple, l'eau, les alcools (méthanol, éthanol, propanol, etc.) ou d'autres liquides minéraux ou organiques connus pour dissoudre les additifs choisis et dans la mesure où le solvant choisi est compatible avec les autres produits ou solvants mis en oeuvre dans le procédé.

Comme additif halogéné on utilisera avantageusement le chlore, le brome, le fluor et l'iode, l'acide chlorhydrique, l'acide bromhydrique, l'acide fluorhydrique, l'acide iodhydrique ou tout autre composé halogéné par exemple un composé choisi dans le groupe constitué par les halogénés d'hydrocarbylaluminium de formule générale A1 Rx Xy où R représente un groupement hydrocarboné contenant par exemple jusqu'à 12 atomes de carbone tel que alkyl, aryl, aralkyl, alkaryl, cycloalkyl, X représentant un halogène (chlore ou brome notamment) et x ayant une valeur de 1 à 1,5, y ayant une valeur de 1,5 à 2, avec de préférence x = 1, y = 2, avec x + y = 3 (comme exemples de tels composés, on peut mentionner notamment le sesquichlorure d'éthylaluminium, le dichloroéthylaluminium, le dichloroisobutylaluminium et le dibromométhylaluminium). On peut utiliser également les acides halogénocarboxyliques de formule R1 COOH dans laquelle R1 est un radical alkyl halogéné, notamment ceux qui renferment au moins un atome d'halogène en alpha du groupe COOH avec, au total, de 2 à 10 atomes de carbone par molécule. Une classe d'acides pouvant être utilisée inclut les acides halogénocarboxyliques de formule R'1 COOH dans laquelle R'1 est un reste halogénoalkyl renfermant de 1 à 3 atomes de carbone, de formule Cm Hp Xq où X est un halogène (fluor, chlore, brome, iode), m = 1,2 ou 3, p est égal à zéro ou à un nombre entier, q est un nombre entier, avec par exemple la condition que p + q = 2 m + 1. On utilisera également notamment un acide halogénoacétique de formule R2 COOH dans laquelle R2 est un reste halogénométhyle de formule CXn H3-n où X est le fluor, le chlore, le brome ou l'iode avec n entier de 1 à 3. On peut citer comme acides utilisables, les acides trifluoroacétique, difluoroacétique, monofluoroacétique, trichloroacétique, dichloroacétique, monochloroacétique, tribromoacétique, dibromoacétique, monobromoacétique, triiodoacétique, diiodoacétique, monoiodeacétique, pentafluoropropionique, fluor-2-propionique, dichloro-2-prioionique, chloro-2-propionique, heptafluorobutyrique, fluoro-2-butyrique ou chloro-2-butyrique. Les exemples précédents ne sont pas limitatifs.

On peut également utiliser les halogénures d'alkyle, d'aryle, d'alkylaryl et d'aralkyl de radical alkyle renfermant par exemple 1 à 6 atomes de carbone par molécule : on citera le chlorure de méthyle, le chlorure de méthylène, le chloroforme, le tétrachlorure de carbone, le dichloro-éthane, etc. On pourra également utiliser divers composés halogénés, par exemple le chlorure de thionyle, le chlorure de nitrosyle, l'héxafluoroacétylacétone, la 2-thénoyltrifluoroacétone-TTA, la tri-fluoroacétylacétone. On citera également à titre non limitatif,

3

EP 0 382 588 B1

l'alpha-chloralose, le béta-chloralose, le chloramine-B hydrate, le chloramine-T hydrate, le chloramphénicol, le tétrachlorobenzoquinone, la chloroacétaldéhyde, la chloroacétaldéhyde diéthyl acétal, la chloroacétadéhyde diméthyl acétal, le 2 chloroacétamide, la chloroacétone, la chloroacétonitrile, la 2-chloroacétophénone, la 2'-chloroacétophénone, la 3'-chloroacétophénone, la 4'chloroacétophénone, le chlorure de chloroacétyl, le 2-chloroacrylonitrile, la 2-chloroaniline, la 3-chloroaniline, la 4-chloroaniline, le 3-chloroanisole, le 4-chloroanisole, le 1-chloro-anthracène, le 2-chloro-anthracène, le 2-chlorobenzaldéhyde, le 4-chlorobenzaldéhyde, le chlorobenzène, le 4-chlorobenzènesulfonamide, l'acide 2-chlorobenzoïque, l'acide 3-chlorobenzoïque, l'acide 4-chlorobenzoïque, l' hydrazide 2-chlorobenzoïque, l'hydrazide 4-chlorobenzoïque, le 2-chlorobenzonitrile, le 3-chlorobenzonitrile, le 4-chlorobenzonitrile, le 2-chlorobenzophénone, le 3-chlorobenzophénone, le 4-chlorobenzophénone, la 2-chloro-benzothiazole, le 4-chlorobenzotrichlorure, le 2-chlorobenzotrifluorure, le 4-chlorobenzotrifluorure, le 2-chlorobenzoyl chlorure, le 3-chlorobenzoyl chlorure, le 4-chlorobenzoyl chlorure, le 4-chlorobenzylamine, le 2-chlorobenzyl bromure, le 3-chlorobenzyl bromure, le 2-chlorobenzyl chlorure, le 2-chlorobenzyl chlorure, le 4-chlorobenzyl chlorure, le 2-chlorobenzyl cyanure, le 3-chlorobenzyl cyanure, le 4-chlorobenzyl cyanure, le 2-(4 chlorobenzyl) pyridine, le 4-(4 chlorobenzyl) pyridine, le 1-chlorobutane, le 2-chlorobutane, le 4-chloro-1-butane, le 3-chloro-2-butanone, le 2-chloro-2-butène, l'acide 4-chlorobutyrique, le 4-chlorobutyronitrile, le 4-chlorobutyrophénone, le 4-chloro-2-butyrothiénone le 4-chlorobutyrothiénone, le 4-chlorobutyryl chlorure, le 3-chloro-2-chlorométhyl-1-propène, l'acide 2-chlorocinnamique, l'acide 3-chloro-cinnamique, le 2-chlorocyclohexanol, le 1-chlorodécane, le 4-chloro-2,6 diaminopyride, l'acide chlorofluoro-acétique, le 1-chloro-2,4-dinitrobenzène, le 1-chloro-3,4-dinitrobenzène, l'acide 2-chloroéthane-sulfonique, le 2-chloro-1-éthanesulfonyl chlorure, le 2-chloroéthanol, le 2(2-chloroéthoxy) éthanol, le N(2-chloroéthyl)acétamide, le carbonate de chloroéthylène, le 2-chloroéthyl ether, le 3-chloro-4-fluoroaniline, le 4-chloro-2-fluoroaniline, le 2-chloro-6-fluorobenzal chlorure, le 2-chloro-6-fluorobenzaldéhyde, le 1-chloro-3-fluorobenzène, l'alcool 2-chloro-6-fluorobenzyl, l'acide 2-chloro-6-fluorophénylacétique, le 2-chloro-6-fluorophénylacétonitrile, le 2-chloro-4-fluorotoluène, le 2-chloro-6 fluorotoluène, le 4-chloro-2-fluorotoluène, le 1-chloroheptane, le 1-chlorohexadécane, le 1-chlorohexane, le 6-chloro-1-hexanol, le chlorohydroquinone, le 5-chloro-2-hydroxyaniline, le 5-chloro-2-hydroxybenzamide, le chloro-2-iodobenzène, le chloroiodométhane, le 3-chloro-2-méthylaniline, le 3-chloro-4-méthylaniline, le 4-chloro-2-méthylaniline, le 3-chloro-3-méthylpentane, le 4-chloro-3-méthylphénol, le 2-chloro-2-méthylpropane, le 4-chloro-2-méthy-thiopyrimidine, le 1-chlorooctadécane, le 1-chlorooctane, le 3-chloro-2,4-pentanédione, le 1-chloro-3-pentanone, le 5-chloro-2-pentanone, le 2-chlorophénol, le 3-chlorophénol, le 4-chlorophénol, le 1-chloropropane, le 2-chloropropane, le 3-chloro-1,2 propanédiol, le 2-chloro-1-propanol, le 3-chloro-1-propanol, le chloropropène, l'acide 3-chloroproponique, le chlorure de 3-chloropriopionyl, le 3-chloropropyl acéate, l'acide 5-chlorosalicylique, le chlorotétradécane, le 4-chlorothiophénol, le 2-chlorotoluène, le 3-chlorotoluène, le 4-chlorotoluène, le 2-chloro-m-xylène, le 2-chloro-p-xylène, le 4 chloro-o-xylène et l'acide chlorosulfonique.

On citera également, à titre indicatif, le o-aminobenzofluorure, le m-aminobenzofluorure, le p-aminobenzofluorure, le 3-amino-4-chlorobenzotrifluorure, le 5-amino-2-chlorobenzotrifluorure, le benzoyl-1,1,1-trifluoroacétone, le l'o-bromobenzotrifluorure, le m-bromobenzotrifluorure, le p-bromobenzotrifluorure, le bromochlorodifluorométhane, le-1-bromo-2,4-difluorobenzène, l'o-bromofluorobenzène, le m-bromofluorobenzène, le p-bromofluorobenzène, le carbonyle fluorure, le chlorure trifluorure, l'o-chlorobenzotrifluorure, le m-chlorobenzotrifluorure, le p-chloro-benzotrifluorure, le chlorofluoroacétamide, le 1-chloro-1,1-difluoroéthane, le 3-chloro-4-fluoronitrobenzène, le 2-chloro-5-nitrobenzotrifluorure, le chloropentafluorobenzène, le chlorotrifluoroéthylène, le di-bromodifluorométhane, le dibromofluorométhane, le 1,2 dibromohexafluoropropane, le 3,4 dichlorobenzotrifluorure, l'acide difluoriacétique, le 2,4-difluoroaniline, le 2,5-difluoroaniline, le 2,6-difluoroaniline, l'o-difluorobenzène, le m-difluorobenzène, le p-difluorobenzène, le 1,1-di-fluoroéthylène, le 1,2-difluorotétrachloroéthane, le 2,4-dinitro-fluorobenzène, l'éthyltrifluoroacétate, le p-fluoroacétophénone, l'o-fluoroaniline, le m-fluoroaniline, la p-fluoroaniline, l'o-fluorobenz-aldéhyde, le m-fluoroaldéhyde, le p-fluorobenzaldéhyde, le fluorobenzène, l'acide o-fluorobenzoique, l'acide p-fluorobenzoique, le m-fluorobenzotrifluorure, l'o-fluorobenzoyl chlorure, le m-fluorobenzoyl chlorure, la 4-fluoro-2-méthylaniline, la p-fluoronitrobenzène, la 4-fluoro-2-nitro-toluène, l'o-fluorophénol, le m-fluorophénol, le p-fluorophénol, la p-fluoropropio-phénone, l'o-fluorotoluène, le m-fluorotoluène, le p-fluorotoluène, l'hexafluoro-2-butyne, le p-fluoronitrobenzène, le 4-fluoro-2-nitrotoluène, l'o-fluorophénol, le m-fluorophénol, le p-fluorophénol, la p-fluoropripiophenone, l'o-fluorotoluène, le m-fluorotoluène, le p-fluorotoluène, l'hexafluoro-2-hutyne, l'hexafluoroéthane, l'hexafluoro-propène, le méthylfluorure, le 1,1,2-trichlorotrifluoroethane, la 1,1,1-trifluoroacétone, le 2,2,2-trifluoroéthanol, l'acide trifluorométhane-sulfonique, la m-tri-fluorométhylbenzaldéhyde, la p-trifluorométhylbenzaldéhyde, l'acide o-tri-fluorométhylbenzaldéhyde, le trifluorométhylbromure et le trifluorométhyliodure. Cette liste n'est pas limitative.

Les catalyseurs que l'on peut traiter conformément à l'invention peuvent être utilisés par exemple pour l'hydrogénation sélective des hydrocarbures insaturés, notamment ceux qui renferment de 3 à 10 atomes de

4

carbone par molécule. Ici, les catalyseurs renferment avantageusement du nickel ou des métaux nobles tels que le palladium. Ce type de procédé est décrit dans le brevet US-A-3674888. Le catalyseur est de préférence à base de palladium ou d'un composé de palladium déposé sur de l'alumine.

Le traitement d'hydrogénation sélective peut s'effectuer de préférence à une température de 0 à 80 °C, sous une pression suffisante pour maintenir une phase liquide, et habituellement comprise entre 1 et 25 bars . Le rapport molaire hydrogène/hydrocarbure insaturé est habituellement compris entre 1 et 5 (de préférence entre 1 et 2). Le débit horaire de charge est avantageusement compris entre 2 et 50 (de préférence entre 10 et 25) volumes liquides par volume de catalyseur.

Un tel procédé permet, par exemple, d'hydrogéner les hydrocarbures acétyléniques et/ou dioléfiniques, sans hydrogénation appréciable des hydrocarbures mono-éthyléniques. Il permet aussi d'hydrogéner les hydrocarbures acétyléniques et le butadiène-1-2 sans hydrogénation appréciable du butadiène-1-3.

Le brevet US 4347392 décrit également des opérations de raffinage mettant en oeuvre des catalyseurs qui pourront être traités conformément à l'invention. Ainsi pour être plus précis sur les opérations de raffinage mettant en oeuvre de tels catalyseurs on peut rappeler que ces opérations ont pour but l'hydrogénation sélective des impuretés d'une coupe éthylène et/ou propylène.

Les procédés de conversion d'hydrocarbures à haute température tels que, par exemple, le steam-cracking (ou craquage à la vapeur), produisent des hydrocarbures insaturés tels que, par exemple, l'éthylène, le propylène, le butadiène, les butènes, ainsi que des hydrocarbures bouillant dans la gamme des essences ; les hydrocarbures gazeux mono-oléfiniques à deux ou trois atomes de carbone obtenus par ce procédé, contiennent également une certaine quantité d'hydrocarbures à plus grand degré d'insaturation. La teneur de ces hydrocarbures varie en fonction de la sévérité du traitement de conversion mais est toujours trop faible pour que l'on envisage de les séparer et de les utiliser comme tels pour la pétrochimie. Cependant, leur présence à côté des hydrocarbures mono-oléfiniques rend difficile voire impossible, l'utilisation de ces derniers pour la pétrochimie. C'est le cas pour la coupe éthylène ou la coupe propylène dont on doit éliminer aussi complètement que possible respectivement l'acétylène ou le propyne et le propadiène.

Pour obtenir du propylène pur, les procédés connus visent à hydrogéner aussi sélectivement que possible le propyne et le propadiène de la coupe C3. Une charge typique provenant du steam-cracking renferme en poids 2 à 5 % de propane, 90 à 95 % de propylène, 2 à 3 % de propyne et 1 à 2 % de propadiène.

La pureté du propylène demandée pour les usages pétrochimiques ultérieurs correspond habituellement à moins de 10 ppm de la somme propyne + propadiène. De plus, on désire que le rendement en propylène soit au moins égal à 100 % et plus généralement supérieur à cette valeur dans la mesure ou propyne et propadiène s'hydrogénent sélectivement en propylène.

Ici, un catalyseur d'hydrogénation sélective doit avoir deux qualités essentielles : une grande sélectivité de manière à hydrogéner sélectivement les impuretés acétyléniques, alléniques et dioléfiniques tout en évitant les réactions parasites d'hydrogénation des mono-oléfines et de polymérisation qui provoquent non seulement une diminution de rendement mais encore provoquent une désactivation du catalyseur.

Les catalyseurs les plus généralement utilisés jusqu'à présent sont constitués par du palladium déposé sur un support d'alumine ou de silice.

L'hydrogénation sélective peut être conduite à une température de 0 à 160°C environ. On peut opérer en phase gazeuse ou en phase liquide. Dans ce dernier cas, applicable en particulier à une coupe C3, la pression doit être suffisante pour maintenir une phase liquide et l'on opère de préférence à 0-80°C sous 10 à 40 bars, à un débit liquide de 2 à 50, de préférence 10 à 30, volumes par volume de catalyseur et par heure. En phase gazeuse, le débit de coupe C2 et/ou C3 (VVH gaz) est, par exemple, de 500 à 20 000 volumes par volume de catalyseur et par heure et la pression, par exemple, de 5 à 30 bars.

Les catalyseurs traités conformément à l'invention conviennent également dans les procédés d'hydrogénation sélective d'une essence contenant à la fois des composés générateurs de gommes et des composés indésirables du soufre, en particulier des mercaptans et/ou du sulfure d'hydrogène ainsi qu'il est expliqué dans US-A-4208.271 et dans US-A-37670.619.

Ces conditions conventionnelles sont bien connues. Elle incluent notamment les conditions suivantes, données à titre d'exemple non limitatif :

- température : 30 - 250°C, de préférence 50 - 200 °C ;
- pression totale : 10 - 100 bars, de préférence 20 - 50 bars ;
- vitesse spatiale ou rapport du volume de charge liquide (essence) au volume de catalyseur par heure (VVH) 0,5 - 10, de préférence 2 - 5 ;
- rapport molaire hydrogène/charge (essence) : 0,1 à 2, de préférence 0,5 à 1,5.

Les supports de catalyseur préférés sont les supports dits neutres, c'est-à-dire, ceux qui ne présentent qu'une acidité faible à nulle, la dite acidité pouvant être mesurés, par exemple, par le test d'absorption d'ammoniac (Journal of Catalysis, 2, 211-222, 1963).

Dans US-A-3770619, on avait proposé un procédé analogue pour la purification des essences de pyrolyse consistant essentiellement en des hydrocarbures ayant de 5 à 10 atomes de carbone par molécule et utilisé pour l'hydrogénation sélective des dioléfines et des alkényl-aromatiques et éventuellement pour une hydrogénation plus poussée de la charge comportant également une hydrogénation partielle des oléfines.

Dans le procédé appliqué aux essences de pyrolyse et mettant en oeuvre au moins deux zones de réaction, les températures majeures de fonctionnement qui sont peu différentes dans chacune des deux zones de réaction, seront comprises entre 20 et 180°C et avantageusement entre 60 et 120°C. Les pressions appliquées dans la première zone de réaction sont comprises entre 5 et 50 et de préférence entre 15 et 35 bars, dans la deuxième zone de réaction, les pressions sont comprises entre 30 et 80 et de préférence entre 35 et 60 bars.

Dans les exemples qui vont suivre, on va étudier, pour diverses réactions l'incidence de la méthode avec addition de composés halogénés.

<u>EXEMPLE 1 :</u>

Dans un premier test, on prépare des agglomérés d'alumine de la manière suivantes : on agglomère au drageoir de l'alumine humide pour la transformer en billes de 2 à 6 mm de diamètre. On traite ces billes par l'eau à 190°C pendant 6 heures, puis on les calcine à 800°C pendant 4 heures. On imprègne les billes par une solution aqueuse à 5 % en poids de nitrate de palladium, en quantité suffisante pour déposer 1 % en poids de palladium par rapport à l'alumine sèche.

On sèche, calcine à 450°C pendant 2 heures, puis on réduit le catalyseur à l'aide d'une solution aqueuse d'acide formique : on imprègne le catalyseur par cette solution, à 20°C, sous pression atmosphérique, de façon à ce que le catalyseur renferme 2 % en poids d'acide formique. Puis on élève à 120°C la température du catalyseur sous une pression de 3 bars et on maintient 2 heures ces conditions opératoires. Puis on sèche le catalyseur. On obtient un catalyseur non conforme à l'invention qui a une surface spécifique de 60 m2/g et un volume poreux de 0,58 cm3/g.

On utilise ce catalyseur pour hydrogéner une coupe C4 à 15°C, sous 15 bars de pression totale, avec un rapport molaire H2/impuretés de 3 et un débit horaire de 25 volumes liquides par volume de catalyseur.

La coupe C4 renfermait 5 % d'hydrocarbures saturés, 5 % d'hydrocarbures mono-oléfiniques, 43,5 % de butadiène-1-3 et 0,5 % d'hydrocarbures acétyléniques (méthylacétylène, éthylacétylène et vinylacétylène). On a obtenu les pourcentages relatifs suivants d'hydrogénation (tableau I) :

TABLEAU I

| Conversion % mol. | |
|---|---|
| Mono-oléfines | 0 |
| Butadiène | 1 |
| Acétyléniques | 98,0 |

Dans un deuxième test, on procède comme dans l'exemple 1. Toutefois, on imprègne ici le catalyseur à l'aide de l'agent réducteur en présence d'additifs halogénés.

On utilise 3 % en poids d'additif par rapport à l'agent réducteur.

Le tableau II suivant donne les résultats obtenus avec ces additifs.

TABLEAU II

| ( ADDITIFS | : $CH_2FCOOH$ | : $CHCl_2COOH$ | : $CH_2ClCOOH$ | : $CBr_3COOH$ | : $CH_2BrCOOH$ | : $CH_2ICOOH$ | : $C_3F_7COOH$ ) |
|---|---|---|---|---|---|---|---|
| ( Conversion | : | : | : | : | : | : | : ) |
| ( % mol. | : | : | : | : | : | : | : ) |
| ( Mono-oléfines : | 0 | : 0 | : 0 | : 0 | : 0 | : 0 | : 0 ) |
| ( Butadiène | : 1 | : 1 | : 1 | : 1 | : 1 | : 1 | : 1 ) |
| ( Acétyléniques : | 98,1 | : 98,2 | : 98,1 | : 98,2 | : 98,1 | : 98,1 | : 98,2 ) |

EXEMPLE 2 :

Dans un premier test, on prépare un catalyseur en imprégnant, par une solution nitrique de nitrate de palladium, un support d'alumine, en billes de 2 mm de diamètre, d'une surface spécifique égale à 57 m2/g et d'un volume poreux total égal à 0,6 cm3/g, de manière à obtenir sur le catalyseur fini, une teneur de 0,3 % en poids de palladium. Après imprégnation, le catalyseur est séché à 120°C à l'étuve puis calciné à 900°C pendant deux heures dans un courant d'air. Le catalyseur est chargé dans un réacteur tubulaire.

On soumet alors le catalyseur au procédé suivant :

Le catalyseur est traité in-situ par une solution aqueuse d'acide propionique ; on effectue l'imprégnation à 20°C sous pression atmosphérique, de façon à ce que le catalyseur renferme 2 % en poids d'acide propionique. On élève à 130°C la température du catalyseur sous une pression de 3,5 bars et on maintient ces conditions opératoires pendant deux heures. Puis on sèche le catalyseur.

Un échantillon du catalyseur est examiné par microscopie électronique. On trouve une grosseur moyenne des cristallites de palladium de 80 A°.

En vue d'hydrogéner des acétylèniques et des dioléfines sans hydrogénation appréciable des hydrocarbures mono-éthyléniques, on opère dans les conditions opératoires suivantes :

- vitesse spatiale (VVH liquide) = 20
- pression = 20 bars
- température = 20°C
- H2/propyne + propadiène = 1,1 mole/mole.

Les analyses de la charge et du produit obtenu sont rassemblées dans le tableau III suivant :

## TABLEAU III

| Composés | Charge % poids | Produit % poids |
|---|---|---|
| Propane | 4,0 | 6,2 |
| Propylène | 91,5 | 93,65 |
| Propyne | 2,7 | indétectable |
| Propadiène | 1,8 | environ 8 ppm |
| Oligomères | - | 0,15 |
| TOTAL | 100 | 100 |

Dans un deuxième test, on opère comme dans le premier test. Toutefois, conformément à l'invention, on effectue l'imprégnation de l'agent réducteur en présence de 2 % en poids, par rapport à l'agent réducteur d'un additif halogène qui est $C_3F_7COOH$.

En utlisant la même charge que dans le premier test, le produit obtenu a la composition suivante donnée dans le tableau IV.

## TABLEAU IV

% poids

| | % poids |
|---|---|
| - propane : | 6,20 |
| - propylène : | 93,70 |
| - propyne : | indétectable |
| - propadiène : | indétectable |
| - oligomères : | 0,10 |
| TOTAL : | 100 |

### EXEMPLE 3 :

Dans un premier test, on prépare un catalyseur en imprégnant, par une solution nitrique de nitrate de palladium et de nitrate d'argent, un support d'alumine, en billes de 2 mm de diamètre, d'une surface spécifique égale à 10 m2/g et d'un volume poreux total égal à 96 cm3/g, de manière à obtenir sur le catalyseur fini, une teneur de 0,3 % en poids de palladium et 0,3 % d'argent. Après imprégnation, le catalyseur est séché à 120 °C à l'étuve puis calciné à 450 °C pendant deux heures dans un courant d'air.

Le catalyseur est chargé dans un réacteur tubulaire puis est réduit in-situ conformément à l'invention de la façon suivante :

le catalyseur est traité par une solution aqueuse d'acide formique ; on effectue l'imprégnation à 20°C sous pression atmosphérique, de façon à ce que le catalyseur renferme 2 % en poids d'acide formique. On élève à 130°C la température du catalyseur sous une pression de 3,5 bars et on maintient ces conditions opératoires pendant deux heures. Puis on sèche le catalyseur.

On utilise le catalyseur ainsi obtenu dans une hydrogénation sélective d'un di-oléfine.

On opère dans les conditions opératoires suivantes :

- vitesse spatiale (VVH liquide) = 30
- pression = 10 bars
- température = 40 °C
- H2/butadiène = 1,8 mole/mole

Les analyses de la charge et du produit obtenu sont rassemblées dans le tableau V suivant :

Le rendement pondéral en produit est pratiquement égal à 100 % on constate que pratiquement tout le butadiène est transformé. On note ici une excellente sélectivité du catalyseur puisque le butène-1 est présent dans le produit à une teneur presque équivalente à celle de la charge (27,24 % contre 28 %). Le rendement en butène-1 est de 27,24/28 soit 97,3 %, la perte minime ici en butène n'est donc que 100 - 97,3 = 2,7 %.

Dans un deuxième test, on opère comme dans le premier test. Toutefois le catalyseur réduit, conformément à l'invention en effectuant l'imprégnation de l'agent réducteur en présence de 3 % en poids, par rapport à l'agent réducteur d'un additif halogéné qui est $CBr_3COOH$. Les résultats sont données dans le tableau V suivant.

TABLEAU V

| COMPOSE | CHARGE % PDS | PRODUIT % PDS (premier test) | PRODUIT % PDS (deuxième test) |
|---|---|---|---|
| Butène-1 | 28 | 27,24 | 27,35 |
| Butène-2 cis | 8 | 8,24 | 8,20 |
| Butène-2 tr | 13 | 13,42 | 13,35 |
| Butadiène | 0,3 | < 10 ppm | < 10 ppm |
| Isobutène | 44,2 | 44,2 | 44,2 |
| Butane | 5 | 5,4 | 5,4 |
| Isobutane | 1,5 | 1,5 | 1,5 |
| Polymères | Néant | < 20 ppm | < 20 ppm |

On observe ici que le catalyseur est aussi actif que dans le premier test, par contre sa sélectivité est améliorée puisque le butène-1 présent dans le produit est 27,35 %. Le rendement en butène-1 est donc de 27,35/28 soit 97,68 % représentant une perte de 2,32 %.

EXEMPLE 4 :

On se propose d'adoucir une charge en provenance d'un craquage à la vapeur (steam-cracking) de gas-oil et qui a les caractéristiques suivantes :

| Caractéristiques | Méthode | Résultats |
|---|---|---|
| Masse volumique à 15° C | NF T 60-101 | 0,859 |
| Distillation ASTM °C | NF M 07-002 | |
| Point initial | | 55 |
| 50 % | | 111 |
| Point final | | 180 |
| Soufre total (ppm en poids) | NF M 07-014 | 1500 |
| Soufre $H_2S$ (ppm en poids) | | < 2 |
| Soufre mercaptan (ppm en poids) | NF M 07-031 | 70 |
| Corrosion lame de cuivre | NF M 07-015 | 1b |
| Essai au plombite (Docteur Test) | NF M 07-005 | positif |
| Indice de brome (g Br/100 g) | NF M 07-017 | 52 |
| Indice d'anhydride maléique | | |
| (MAV) mg anhydride maléique/g | UOP 326-58 | 97 |
| Période d'induction (Mn) | NF M 07-012 | 20 |
| avec 20 ppm en poids d'antioxydant | | |
| (NN'-di-sec. Butyl-paraphenylène diamine) | | |
| Indice d'octane "Recherche" | NF M 07-012 | 98 |
| (0,05 % en poids de plomb tétraéthyle) | | |

On fait passer cette essence, en mélange avec de l'hydrogène, dans un réacteur rempli exclusivement d'un catalyseur constitué par 10 % poids de nickel déposé de manière conventionnelle à partir de nitrate de nickel sur support d'alumine de 70 m²/g de surface spécifique. Avant l'emploi, le catalyseur est calciné à 450° C pendant 2 heures puis réduit de la façon suivante dans un premier test :

le catalyseur est traité par une solution aqueuse d'acide propionique ; on effectue l'imprégnation à 20°C sous pression atmosphérique, de façon à ce que le catalyseur renferme 2 % en poids d'acide propionique. On élève à 130°C la température du catalyseur sous une pression de 3,5 bars et on maintient ces conditions opératoires pendant deux heures. Puis on sèche le catalyseur.

Les conditions opératoires réactionnelles sont les suivantes :
- vitesse spatiale vol/vol/h : 2
- température moyenne °C : 130 °C
- pression totale (bars) : 40
- H2/charge (moles) : 0,5

Le produit obtenu après 100 heures de fonctionnement a les caractéristiques principales données dans le tableau VI.

Dans un deuxième test, l'ajout d'acide propionique se fait en présence de 3 % en poids par rapport à cet acide d'un additif halogéné qui est $CHCl_2COOH$.

Les résultats sont données dans le tableau VI.

TABLEAU VI

| Indice de brome g/100 g | : | 43 | 43 |
|---|---|---|---|
| MAV mg/g (indice d'anhydride maléique) | : | 10 | 10 |
| Période d'induction (mn) avec 20 ppm d'antioxydant | : | 480 | 490 |
| Soufre mercaptan (ppm en poids) | : | 6 | 3 |
| Soufre total (ppm en poids) | : | 1 500 | 1 500 |
| Corrosion lame de cuivre | : | 1a | 1a |
| Essai au plombite | : | négatif | négatif |
| Indice d'octane "Recherche" | : | 98 | 98 |

On observe que dans les deux tests le produit est adouci par rapport à la charge et répond bien aux spécifications demandées pour les carburants auto habituels. Toutefois on note une amélioration dans le deuxième test en comparaison avec les résultats du premier test en ce qui concerne l'abaissement du soufre mercaptan.

## Revendications

1. Procédé de réduction d'un catalyseur de raffinage renfermant un support et une phase active à base d'au moins un métal du groupe VIII de la classification périodique des éléments caractérisé en ce que, avant la mise en oeuvre de ce catalyseur dans une zone de réaction de raffinage, on réalise un traitement en trois étapes conduites soit "in-situ", c'est-à-dire dans la zone de réaction, ou "ex-situ", c'est-à-dire en dehors de la zone de réaction, le dit traitement étant conduit en 3 étapes consistant :

   (a) à imprégner dans un premier temps le catalyseur entre 0 et 50°C, avec une solution aqueuse ou organique d'un composé qui est un agent réducteur choisi dans le groupe constitué par les aldéhydes renfermant 2 à 14 atomes de carbone par molécule (et de préférence 3 à 12 atomes de carbone), les cétones ou polycétones renfermant 3 à 18 (et de préférence 3 à 12) atomes de carbone par molécule, les éthers renfermant 2 à 14 (de préférence 3 à 12) atomes de carbone par molécule, les alcools ou polyalcools renfermant 1 à 14 atomes (et de préférence 2 à 12) de carbone par molécule et les acides organiques ou polyacides renfermant 1 à 14 (et de préférence 1 à 12 atomes de carbone par molécule), de façon à introduire 10 ppm à 100 % (en poids), de ce composé sur le catalyseur.

   (b) à élever dans une seconde étape la température du catalyseur ainsi impregné à une température comprise entre 100 et 150°C et sous une pression de 1 à 10 bars

   (c) à sécher dans un troisième étape le catalyseur pour éliminer le solvant d'imprégnation et l'eau formée à l'étape (b).

   Le procédé étant caractérisé en ce que, au cours de la première étape, on ajoute à l'agent réducteur, au moins un additif choisi parmi les halogènes et les composés halogénés, le poids d'additif ajouté étant compris entre 0,1 et 10 % en poids par rapport au poids de l'agent réducteur.

2. Procédé selon la revendication 1 dans lequel on utilise 1 à 6 % en poids du dit additif par rapport à l'agent réducteur.

3. Procédé selon la revendication 1 dans lequel on utilise 2 à 5 % en poids du dit additif par rapport à l'agent réducteur.

4. Utilisation du procédé selon l'une des revendications 1 à 3 dans les réactions d'hydrogénation sélective des hydrocarbures insaturés.

5. Utilisation du procédé selon l'une des revendications 1 à 3 dans les réactions d'hydrogénation sélective d'hydrocarbures acétyléniques et/ou dioléfiniques.

11

6. Utilisation du procédé selon l'une des revendications 1 à 3 dans les réactions d'hydrogénation sélective des essences.

7. Utilisation du procédé selon l'une des revendications 1 à 3 dans les réactions d'hydrogénation sélective des essences contenant des composés générateurs de gommes.

8. Utilisation du procédé selon l'une des revendications 1 à 3 dans les réactions d'hydrogénation d'effluents de pyrolyse.

9. Utilisation du procédé selon l'une des revendications 1 à 3 dans les réactions d'hydrogénation de craquage.

10. Utilisation du procédé selon l'une des revendications 1 à 3 dans les réactions d'hydrogénation de craquage à la vapeur.

**Patentansprüche**

1. Verfahren zur Reduktion eines Raffinationskatalysators, der aus einem Träger und einer aktiven Phase auf der Grundlage von mindestens einem Metall der Gruppe VIII des Periodensystems der Elemente besteht, dadurch gekennzeichnet, daß er, bevor er in einer Reaktionszone zur Raffination eingesetzt wird, einer dreistufigen Behandlung, entweder "in situ", d.h. innerhalb der Reaktionszone, oder "ex situ", d.h. außerhalb der Reaktionszone unterzogen wird, wobei die besagte dreistufige Behandlung die folgenden drei Stufen umfaßt:
   (a) zuerst die Imprägnierung des Katalysators zwischen 0 und 50 °C mit einer wässrigen oder organischen Lösung einer Verbindung, die ein Reduktionsmittel darstellt, das aus der Gruppe gewählt wird, die durch die Aldehyde mit zwischen einschließlich 2 bis 14 Kohlenstoffatomen pro Molekül (und vorzugsweise mit 3 bis 12 Kohlenstoffatomen), die Ketone oder Polyketone mit zwischen einschließlich 3 bis 18 (und bevorzugt mit 3 bis 12) Kohlenstoffatomen pro Molekül, die Ether mit zwischen einschließlich 2 bis 14 (bevorzugt mit 3 bis 12) Kohlenstoffatomen pro Molekül, die Alkohole oder Polyalkohole mit zwischen einschließlich 1 und 14 Kohlenstoffatomen (vorzugsweise mit 2 bis 12) pro Molekül und die organischen Säuren oder Polysäuren mit zwischen einschließlich 1 und 14 (und vorzugsweise zwischen 1 und 12 Kohlenstoffatomen pro Molekül) gebildet wird, auf eine Art, um 10 ppm bis 100 % (bezogen auf Gewicht) dieser Verbindung auf dem Katalysator einzuführen.
   (b) in einem zweiten Schritt die Erhöhung der Temperatur des auf diese Art imprägnierten Katalysators auf eine Temperatur zwischen einschließlich 100 und 150 °C und zwar unter einem Druck zwischen 1 bis 10 bar
   (c) in einem dritten Schritt die Trocknung des Katalysators, um das Lösungsmittel der Imprägnierung und das Wasser, das sich beim Schritt (b) gebildet hat, zu eliminieren.
   Das Verfahren wird dadurch gekennzeichnet, daß im Laufe des ersten Schrittes zum Reduktionsmittel mindestens einen Zusatz zugegeben wird, der unter den Halogenen und den Halogenverbindungen ausgewählt wird, wobei das Gewicht des zugefügten Zusatzes zwischen einschließlich 0,1 und 10 Gew.-%, bezogen auf das Gewicht des Reduktionsmittels, liegt.

2. Verfahren gemäß Anspruch 1, in dem 1 bis 6 Gew.-% des besagten Zusatzes, bezogen auf das Reduktionsmittel, verwendet werden.

3. Verfahren gemäß Anspruch 1, in dem 2 bis 5 Gew.-% des besagten Zusatzes, bezogen auf das Reduktionsmittel, verwendet werden.

4. Anwendung des Verfahrens gemäß eines der Ansprüche 1 bis 3 bei Reaktionen der selektiven Hydrierung von ungesättigten Kohlenwasserstoffen.

5. Anwendung des Verfahrens gemäß eines der Ansprüche 1 bis 3 bei Reaktionen der selektiven Hydrierung von acetylenischen Kohlenwasserstoffen und/oder Diolefinen.

6. Anwendung des Verfahrens gemäß eines der Ansprüche 1 bis 3 bei Reaktionen der selektiven Hydrierung von Benzinen.

7. Anwendung des Verfahrens gemäß eines der Ansprüche 1 bis 3 bei Reaktionen der selektiven Hydrierung von Benzinen, die Grundstoffe zur Gummiherstellung beinhalten.

8. Anwendung des Verfahrens gemäß eines der Ansprüche 1 bis 3 bei Reaktionen der selektiven Hydrierung von Pyrolyseausträgen.

9. Anwendung des Verfahrens gemäß eines der Ansprüche 1 bis 3 bei Reaktionen der Hydrierung beim Cracken.

10. Anwendung des Verfahrens gemäß eines der Ansprüche 1 bis 3 bei Reaktionen der Hydrierung beim Cracken in der Dampfphase.

## Claims

1. Process for the reduction of a refining catalyst containing a support and an active phase with a base of at least one metal of the Group VIII of the periodic table characterized in that, before using the catalyst in a refining reaction zone, a three-stage treatment is performed either in situ i.e., in the reaction zone, or ex situ, i.e., outside the reaction zone, said treatment being performed in 3 stages consisting in:
   a) in a first stage, impregnating the catalyst between 0 and 50°C, with an aqueous or organic solution of a compound that is a reducing agent selected from the group consisting of aldehydes containing 2 to 14 carbon atoms per molecule (and preferably 3 to 12 carbon atoms), the ketones or polyketones containing 3 to 18 (and preferably 3 to 12) carbon atoms per molecule, ethers containing 2 to 14 (preferably 3 to 12) carbon atoms per molecule, alcohols or polyalcohols containing 1 to 14 (preferably 2 to 12) carbon atoms per molecule and organic acids or polyacids containing 1 to 14 (and preferably 1 to 12) carbon atoms per molecule, so as to introduce 10 ppm at 100% (by weight), of this compound on the catalyst.
   b) in a second stage, raising the temperature of the catalyst thus impregnated to a temperature between 100 and 150°C and under a pressure of 1 to 10 bars
   c) in a third stage, drying the catalyst to eliminate the impregnation solvent and the water formed in step (b).
   The process being characterized in that, during the first stage, there is added to the reducing agent at least one additive selected from among the halogens and halogen compounds, the weight of the added additive being between 0.1 to 10% by weight relative to the weight of the reducing agent.

2. Process according to claim 1, wherein 1 to 6% by weight of said additive relative to the reducing agent is used.

3. Process according to claim 1 wherein 2 to 5% by weight of said additive relative to the reducing agent is used.

4. Use of the process according to one of claims 1 to 3 in selective hydrogenation reactions of unsaturated hydrocarbons.

5. Use of the process according to one of claims 1 to 3 in selective hydrogenation reactions of acetylene and/or diolefin hydrocarbons.

6. Use of the process according to one of claims 1 to 3 in selective hydrogenation reactions of gasolines.

7. Use of the process according to one of claims 1 to 3 in selective hydrogenation reactions of gasolines containing gum-generating compounds.

8. Use of the process according to one of claims 1 to 3 in hydrogenation reactions of pyrolysis effluents.

9. Use of the process according to one of claims 1 to 3 in cracking hydrogenation reactions.

10. Use of the process according to one of claims 1 to 3 in steam cracking hydrogenation reactions.